**Europäisches Patentamt**

**European Patent Office**

**Office européen des brevets**

(11) Veröffentlichungsnummer: **0 098 505**
**A2**

## (12) EUROPÄISCHE PATENTANMELDUNG

(21) Anmeldenummer: **83106281.5**

(22) Anmeldetag: **28.06.83**

(51) Int. Cl.³: **B 29 H 15/00**

(30) Priorität: **01.07.82 DE 3224610**

(43) Veröffentlichungstag der Anmeldung: **18.01.84**
**Patentblatt 84/3** .

(84) Benannte Vertragsstaaten: **AT CH DE FR IT LI NL**

(71) Anmelder: **METZELER KAUTSCHUK GMBH,**
**Gneisenaustrasse 15, D-8000 München 50 (DE)**

(72) Erfinder: **Tornau, Fred, Am Forst 16, D-6110 Dieburg (DE)**

(74) Vertreter: **Michelis, Theodor, Dipl.-Ing.,**
**Gneisenaustrasse 15, D-8000 München 50 (DE)**

(54) **Verfahren zum Verbinden eines Gummifussventils mit einem Luftschlauch und Vorrichtung zur Durchführung des Verfahrens.**

(57) Die Erfindung betrifft ein Verfahren zum Verbinden eines Gummifußventils mit einem Luftschlauch, insbesondere für Fahrradreifen, bei dem die Unterseite des Gummifußes mit der Schlauchoberfläche im Bereich eines Ventilloches dauerhaft verbunden wird. Die bei der Verbindung eines bereits ausvulkanisierten Schlauches mit einem ebenfalls ausvulkanisierten Gummifußventil auftretenden Schwierigkeiten werden erfindungsgemäß durch folgende Verfahrensschritte gelöst:

a) Aufrauhen des ausvulkanisierten Schlauches an der Stelle des Ventilsitzes und Einschneiden des Ventilloches,

b) Aufbringen einer vulkanisierbaren Lösung auf die aufgerauhte Stelle und auf die Unterseite des ausvulkanisierten Gummifußes,

c) Vortrocknen der aufgebrachten Lösung,

d) Aufsetzen des Gummifußes auf den Schlauch und Ausvulkanisieren unter Druck- und Wärmezufuhr.

0098505

METZELER KAUTSCHUK GMBH       München, den 20.6.1983
                              Unser Zeichen:MK127P82 EP

Verfahren zum Verbinden eines Gummifußventils mit einem Luftschlauch und Vorrichtung zur Durchführung des Verfahrens

Die Erfindung betrifft ein Verfahren zur Verbindung eines Gummifußventils mit einem Luftschlauch, insbesondere für Fahrradreifen, bei dem die Unterseite des Gummifußes mit der Schlauchoberfläche im Bereich eines Ventilloches dauerhaft verbunden wird, sowie entsprechende Vorrichtungen zur Durchführung des Verfahrens.

Bei Fahrradschläuchen mit herkömmlichen Ventilen, die mit dem Schlauch verschraubt sind, treten des öfteren Undichtigkeiten an der Befestigungsstelle des Ventils durch Quetschung mit der Radfelge oder den Reifenwülsten auf. Es ist daher bereits vorgesehen, Ventile mit einem Gummifuß zu verwenden, die an den Schlauch anvulkanisiert werden. Dies ist nach bisher bekannten Verfahren jedoch nur möglich, wenn Schlauch und Gummifuß des Ventils noch im unvulkanisierten Zustand zusammengebracht und gemeinsam ausvulkanisiert werden.

Bei einer Schlauchfertigung, bei der der Schlauch endlos auf einem Extruder gespritzt und anschließend kontinuierlich beispielsweise im Salzbad vulkanisiert wird, um anschließend auf Fertigmaßabschnitte zugeschnitten und konfektioniert zu werden, ergeben sich jedoch Schwierigkeiten, um eine feste Verbindung zwischen dem Gummifußventil und dem bereits ausvulkanisierten Schlauch zu erreichen , da ein herkömmliches Aufkleben mit einer entsprechenden Gummilösung nicht die erforderliche Dauerfestigkeit bringt.

Der Erfindung liegt daher die Aufgabe zugrunde, ein Verfahren zu schaffen, mit dem ein Zusammenvulkanisieren eines vulkanisierten Schlauches mit einem vulkanisierten Gummifußventil möglich ist.

Zur Lösung dieser Aufgabe sind daher erfindungsgemäß die folgenden Verfahrensschritte vorgesehen:

a) Aufrauhen des ausvulkanisierten Schlauches an der Stelle des Ventilsitzes und Einschneiden des Ventilloches,

b) Aufbringen einer vulkanisierbaren Lösung auf die aufgerauhte Stelle und auf die Unterseite des ausvulkanisierten Gummifußes,

c) Vortrocknen der aufgebrachten Lösung,

d) Aufsetzen des Gummifußes auf den Schlauch und Ausvulkanisieren unter Druck- und Wärmezufuhr.

Dabei wird zweckmäßigerweise als Material für den Gummifuß das gleiche Material wie für den Schlauch, insbesondere Butylgummi, verwendet und als vulkanisierbare Lösung für die Befestigung des Gummifußes eine gelöste Mischung des Schlauchrohmaterials.

Durch die beschriebenen Verfahrensschritte ist es möglich, auch bereits ausvulkanisierte Teile zusammenzuvulkanisieren, um damit eine optimale Verbindung zwischen Gummifußventil und Schlauch zu erreichen.

Bei den einzelnen Verfahrensschritten erfolgt zweckmäßigerweise das Aufrauhen des Schlauches und das Einschneiden des Ventilloches in ein und demselben Arbeitsgang.

Als entsprechende Vorrichtung zur Durchführung dieses Verfahrensschrittes ist erfindungsgemäß eine auf den in einer Halterung liegenden flachen Schlauch absenkbare kreisförmige Rauhscheibe vorgesehen, die in ihrem Zentrum einen nach unten herausragenden Schneidansatz mit einer Höhe entsprechend der Dicke einer Schlauchwandung zum Einschneiden des Ventilloches trägt. Damit ist es auf einfache Weise möglich, an einer beliebigen Stelle des Schlauchumfangs ein Ventilloch nur einseitig in den Schlauch zu bohren.

Zum Anvulkanisieren des Gummufußventils ist in Weiterbildung der Erfindung eine regelbar beheizte stationäre Grundplatte mit mindestens einer Bohrung zur Aufnahme des Ventilkörpers und einer Ansenkung für die Oberseite des Gummifußes vorgesehen, in die der Schlauch mit dem aufgeklebten Gummifußventil einlegbar ist, und wobei auf die Grundplatte ein hydraulisch betätigter Pressenstempel absenkbar ist.

Dabei ist es auch möglich, daß die Grundplatte mehrere nebeneinanderliegende Bohrungen zur Aufnahme mehrerer Schläuche in einem Vulkanisationszyklus aufweist und daß sich der Pressenstempel einstückig über die gesamte Länge der Grundplatte erstreckt.

Anhand einer schematischen Zeichnung sind Aufbau und Wirkungsweise von Ausführungsbeispielen nach der Erfindung näher erläutert. Dabei zeigen:

Fig. 1    einen Längsschnitt durch einen Schlauchabschnitt im Bereich der Ventilbohrung mit darüberliegendem Gummifußventil,

Fig. 2    eine Aufsicht auf diesen Schlauchabschnitt mit der aufgerauhten Stelle und dem Ventilloch,

Fig. 3  eine schematische Seitenansicht der Aufrauh-
und Schneidvorrichtung für das Ventilloch,

Fig. 4  eine Aufsicht auf die Grundplatte zur Anvulkanisation des Gummifußventils und

Fig. 5  einen Längsschnitt durch die Grundplatte
nach Fig. 4 mit einem eingelegten Schlauch
und dem zugehörigen Pressenstempel.

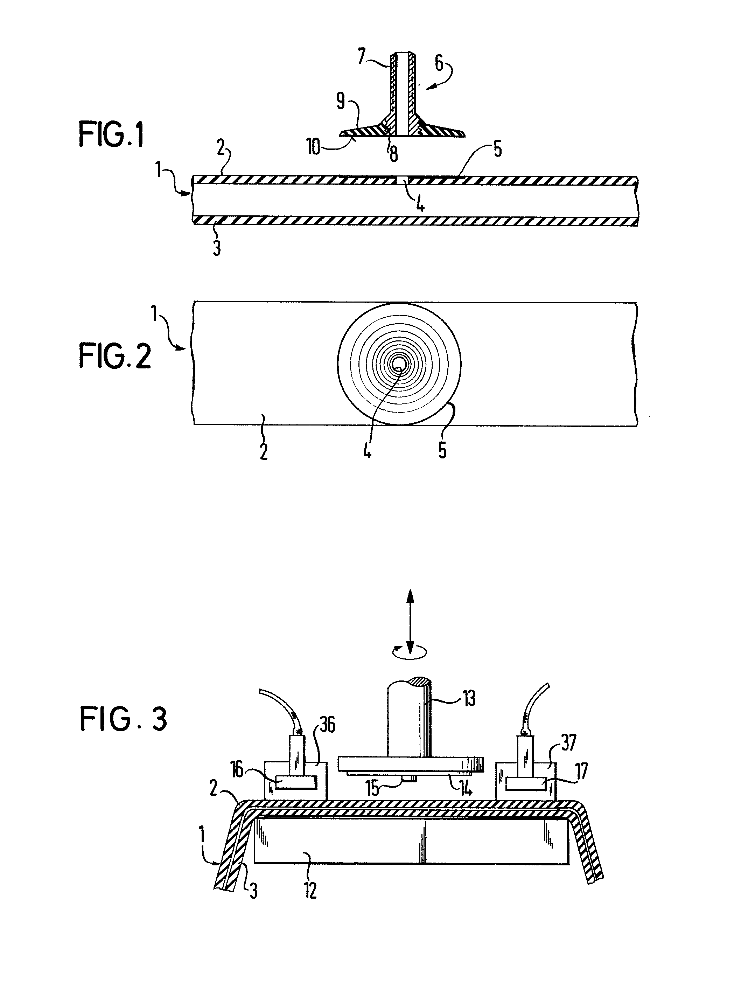

Fig. 1 zeigt einen Längsschnitt durch einen Schlauchabschnitt 1 mit Schlauchoberseite 2 und Schlauchinnenseite 3 im nahezu luftlosen Zustand, in dem Bereich, in
dem das Gummifußventil 6 aufgesetzt werden soll. Dabei
ist - wie auch aus der Aufsicht auf die Schlauchoberseite
2 aus Fig. 2 zu ersehen ist - bereits das Ventilloch 4
in die Schlauchoberseite 2 eingeschnitten und die Oberseite kreisflächenförmig entsprechend dem Bereich 5 zur
besseren Haftung aufgerauht. Das Gummifußventil 6 besteht aus dem eigentlichen metallischen Ventilschaft 7,
an dessen unterem Ende über eine gute Kontaktfläche bildende Rillen 8 der eigentliche Gummifuß 9 anvulkanisiert
ist. Dieser Gummifuß 9 wird dann mit seiner Unterseite
10 in noch zu beschreibender Weise auf die aufgerauhte
Stelle 5 der Schlauchoberseite 2 aufgesetzt und anvulkanisiert.

Die einzelnen erfindungsgemäßen Herstellungsschnitte
seien im folgenden anhand weiterer Figuren erläutert.

Der endlos extrudierte und kontinuierlich vulkanisierte
Schlauch aus Butyl wird zunächst auf Konfektionsmaß geschnitten und anschließend an seinen überlappenden Enden
verklebt. Als Vorbehandlung für die Befestigung des Ventils wird dann zunächst die Befestigungsstelle aufgerauht und das Ventilloch geschnitten. Das geschieht in einem Arbeitsgang in einer Vorrichtung, wie sie schematsich in Fig. 3 dargestellt ist. Danach wird der Schlauch 1 zunächst auf eine flache Halterung 12 genau gegen zwei Anschläge 36 und 37 an der hinteren Kante der Halterung 12 aufgelegt, wobei die korrekte Lage des Schlauches 1 durch zwei Photozellen 16 und 17 überwacht wird. Oberhalb des so in Position gebrachten Schlauches 1 ist nun eine ebene kreisförmige Rauhscheibe 14 über einen Stempel 13 absenkbar gehalten, die die Schlauchoberseite 2 im Verklebungsbereich 5 aufrauht. Gleichzeitig trägt diese Rauhscheibe 14 im Zentrum einen Schneidansatz 15, der maximal die Höhe entsprechend der Dicke einer Schlauchwandung 2 aufweist. Nach Absenken der Rauhscheibe 14 wird somit genau das Ventilloch 4 geschnitten und die Schlauchoberseite 2 im Bereich 5 aufgerauht.

Anschließend wird - was in der Zeichnung nicht gesondert dargestellt ist - der aufgerauhte Bereich 5 und die Unterseite 10 des Gummifußventils 6 mit einer vulkanisierbaren Lösung eingestrichen. Diese Lösung besteht dabei praktisch aus der verdünnten Mischung des Schlauchrohmaterials, das auch im wesentlichen dem des Gummifußes 9 entspricht. Nach Abtrocknen der Lösung wird das Ventil 6 auf die aufgerauhte und mit Lösung versehene Stelle 5 aufgesetzt.

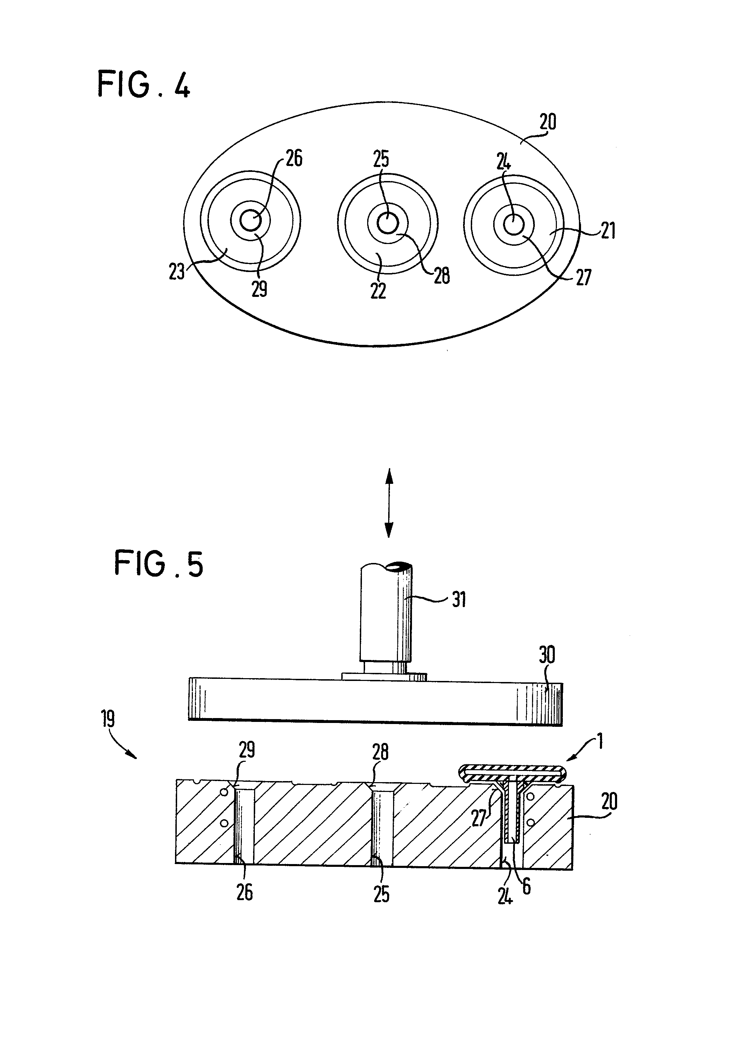

Die Verbindung von Gummifußventil und Schlauch erfolgt dann durch Vulkanisation in einer entsprechenden Vorrichtung 19, die in den Fig. 4 und 5 näher erläutert ist. Diese Vorrichtung 19 weist dabei eine beheizte Grundplatte 20 auf, in die nach dem dargestellten Ausführungsbeispiel in entsprechenden Abständen von mindestens der Breite eines Schlauches drei Bohrungen 24, 25 und 26 mit entsprechenden Ansenkungen 27, 28 und 29 eingeschnitten sind, die genau der Kontur des Ventilschaftes 7 und des Ventilgummifußes 9 entsprechen. In diese Bohrungen 24, 25 und 26 wird dann jeweils ein Schlauch mit seinem Gummifußventil 6 eingesetzt, so daß die Oberseite des Gummifußes 9 genau auf den plattenförmigen Erhebungen 21, 22 und 23 zu liegen kommt. Anschließend wird der Pressenstempel 30, der sich über die gesamte Breite der Grundplatte 20 erstreckt, durch den Hydraulikzylinder 31 abgesenkt und unter entsprechender temperaturgesteuerter Aufheizung der Grundplatte 20 im Bereich der Gummifußventile diese mit den Schläuchen zusammenvulkanisiert. Damit ergibt sich eine feste, aber dennoch elastische Verbindung des Gummifußes 9 mit dem Schlauch 1, die allen Belastungsanforderungen genügt.

München, den 20.6.1983
MK 127 P 82 EP

Patentansprüche

1. Verfahren zum Verbinden eines Gummifußventils mit
einem Luftschlauch, insbesondere für Fahrradreifen, bei
dem die Unterseite des Gummifußes mit der Schlauchoberfläche im Bereich eines Ventilloches dauerhaft verbunden
wird, gekennzeichnet durch
folgende Verfahrensschritte:

a) Aufrauhen des ausvulkanisierten Schlauches an der
Stelle des Ventilsitzes und Einschneiden des Ventilloches,

b) Aufbringen einer vulkanisierbaren Lösung auf die aufgerauhte Stelle und auf die Unterseite des ausvulkanisierten Gummifußes,

c) Vortrocknen der aufgebrachten Lösung,

d) Aufsetzen des Gummifußes auf den Schlauch und Ausvulkanisieren unter Druck- und Wärmezufuhr.

2. Verfahren nach Anspruch 1, dadurch gekennzeichnet,
daß als Material für den Gummifuß das gleiche Material wie
für den Schlauch, insbesondere Butyl, verwendet wird.

3. Verfahren nach Anspruch 1, dadurch gekennzeichnet,
daß die vulkanisierbare Lösung aus der gelösten Mischung
des Schlauchrohmaterials besteht.

4. Verfahren nach Anspruch 1, dadurch gekennzeichnet,
daß das Aufrauhen des Schlauches und das Einschneiden des
Ventilloches in ein und demselben Arbeitsgang erfolgt.

5. Vorrichtung zur Durchführung des Verfahrens nach Anspruch 4, dadurch gekennzeichnet, daß eine auf dem in einer Halterung (12) liegenden flachen Schlauch (1) absenkbare kreisförmige Rauhscheibe (14) vorgesehen ist, die in ihrem Zentrum einen nach unten herausragenden Schneidansatz (15) mit einer Höhe entsprechend der Dicke einer Schlauchwandung (2) zum Einschneiden des Ventilloches (4) trägt.

6. Vorrichtung zum Anvulkanisieren des Gummifußventils in Durchführung des Verfahrens nach Anspruch 1, dadurch gekennzeichnet, daß eine regelbar beheizte, stationäre Grundplatte (20) mit mindestens einer Bohrung (24) zur Aufnahme des Ventilkörpers (7) und einer Ansenkung (27) für die Oberseite des Gummifußes (9) vorgesehen ist, in die der Schlauch (1) mit dem aufgeklebten Gummifußventil (6) einlegbar ist und daß auf die Grundplatte (20) ein hydraulisch betätigter Pressenstempel (30) absenkbar ist.

7. Vorrichtung nach Anspruch 6, dadurch gekennzeichnet, daß die Grundplatte (20) mehrere nebeneinanderliegende Bohrungen (24, 25, 26) zur Aufnahme mehrerer Schläuche (1) in einem Vulkanisationszyklus aufweist, und daß sich der Pressenstempel (30) einstückig über die gesamte Länge der Grundplatte (20) erstreckt.

FIG.1

FIG.2

FIG.3

FIG. 4

FIG. 5